Europäisches Patentamt

(19) European Patent Office

Office européen des brevets

(11) Veröffentlichungsnummer: **0 146 899**

A2

(12) **EUROPÄISCHE PATENTANMELDUNG**

(21) Anmeldenummer: 84115499.0

(22) Anmeldetag: 15.12.84

(51) Int. Cl.⁴: **B 65 G 19/24**

---

(30) Priorität: 22.12.83 DE 3346324

(43) Veröffentlichungstag der Anmeldung:
03.07.85 Patentblatt 85/27

(84) Benannte Vertragsstaaten:
AT BE DE FR GB IT NL

(71) Anmelder: Firma August Thiele
Werkstrasse 3
D-5860 Iserlohn-Kalthof(DE)

(72) Erfinder:
Der Erfinder hat auf seine Nennung verzichtet

(74) Vertreter: Schwarz, Klaus-Jürgen, Dipl.-Ing.
Adenauerallee 46a
D-5300 Bonn 1(DE)

(54) **Kettenschloss für die Kratzkette eines Doppelketten-Kratzförderers.**

(57) Die Schenkel (3, 4) des Kettenschlosses (1) weisen an ihren Außenseiten (3a, 4a) gegenüber den Schenkelaußenseiten (3a, 4a) nach außen hervostehende oder von in die Schenkelaußenseiten (3a, 4a) versenkten Ringnuten (3c, 4c) umgebene ringförmige, vorzugsweise konvexe Anlageflächen (3b, 4b) für den Bolzenkopf (8) und die Mutter (9) des Schraubenbolzens (7) auf. Bei Bedarf können auch an den gegenüberliegenden Stirnflächen des Bolzenkopfes (8) und der Mutter (9) entsprechend gewölbte konkave Aussparungen (8a, 9a) vorgesehen sein, so daß der Schraubenbolzen (7) auch bei einem gegenseitigen Abstand der Außenseiten (3a, 4a) der beiden Schenkel (3, 4) des Kettenschlosses (1), der außerhalb der zulässigen Toleranzen liegt, stets auf Zug und nicht auf Biegung beansprucht wird.

FIG.2

EP 0 146 899 A2

0146899

Akten-Nr.: 71 595/84

Anmelder:    Firma August Thiele, Werkstraße 3,
             5860 Iserlohn-Kalthof,
             Bundesrepublik Deutschland

### Kettenschloß für die Kratzkette eines Doppelketten-Kratzförderers

Die Erfindung betrifft ein Kettenschloß für die Kratzkette eines Doppelketten-Kratzförderers nach dem Oberbegriff des Anspruches 1.

Bei derartigen bekannten Kettenschlössern nach DIN 22 252 bilden die Schenkelaußenseiten des Schloßbügels rings um die beiden Bohrungen ringförmige ebene Anlageflächen für den Bolzenkopf und die Mutter des sich in Kettenlängsrichtung erstreckenden Schraubenbolzens, mit dem die Kettenschlösser an den Stegen von im Gesenk geschmiedeten Kratzeisen befestigt sind, die sich zwischen den beiden Ketten eines Doppelketten-Kratzförderers erstrecken.

Wie die Erfahrung gezeigt hat, liegen der Bolzenkopf des Schraubenbolzens und die Mutter jedoch nur dann an den ebenen Außenseiten der beiden Schenkel des Schloßbügels gleichmäßig an, wenn sowohl die beiden Schenkel des Schloßbügels innerhalb der zulässigen Toleranzen liegen als auch das Stegteil des Kratzeisens weder unter- noch überdimensioniert ist. Diese idealen Voraussetzungen sind jedoch insbesondere nach längerem Einsatz derartiger Kettenschlösser und Kratzeisen in den seltensten Fällen gegeben. So tritt insbesondere an den Stegteilen der Kratzeisen und an den Schenkeln der Kettenschlösser nach längerem Einsatz ein derartiger Verschleiß auf, daß die Schenkel der Kettenschlösser beim Nachspannen der Schraubenbolzen wesentlich stärker zusammengedrückt werden, als dies ursprünglich der Fall war, so daß der Schraubenbolzen mit Bolzenkopf und Mutter an den ebenen Außenseiten der Schloßschenkel nur noch einseitig zur Anlage kommt und bei einem weiteren Nachspannen zunehmend auf Biegung beansprucht wird. Dies kann bereits nach kurzer Betriebsdauer zu einer Überbeanspruchung des Schraubenbolzens und damit zu einem vorzeitigen Bruch führen.

Der Erfindung liegt die Aufgabe zugrunde, diese Schwierigkeiten zu vermeiden und die beiden Schenkel von Kettenschlössern nach dem Oberbegriff des Anspruches 1 so auszubilden, daß der Schraubenbolzen stets auf Zug und nicht auf Biegung beansprucht wird.

Diese Aufgabe wird erfindungsgemäß durch den Kennzeichnungsteil des Anspruches 1 gelöst, während in den Ansprüchen 2 bis 4 besonders vorteilhafte Weiterbildungen der Erfindung gekennzeichnet sind.

Dadurch, daß die ringförmigen Anlageflächen für den Bolzenkopf und die Mutter gegenüber den Schenkelaußenseiten nach außen hervorstehen oder von in die Schenkelaußenseiten versenkten Ringnuten umgeben sind und insbesondere durch die konvexe Ausbildung der Anlageflächen für den Bolzenkopf und die Mutter des Schraubenbolzens an den beiden Außenseiten der Schenkel des Kettenschlosses ergibt sich der Vorteil, daß sowohl der Schraubenbolzen mit seinem Bolzenkopf als auch die Mutter an den Schenkelaußenseiten des Kettenschlosses auch dann näher zur Bolzenachse anliegen, wenn die Schenkel des Kettenschlosses entweder durch eine zu geringe oder eine zu große Dicke des Steges des Kratzeisens oder durch andere Fertigungsungenauigkeiten oder Verschleißerscheinungen nicht genau parallel zueinander stehen. Durch die Anlage von Bolzenkopf und Mutter näher zur Schraubenachse wird der Schraubenbolzen nicht mehr auf Biegung beansprucht, sondern kann sich von selbst den jeweiligen Gegebenheiten anpassen, so daß seine Zugfestigkeit in vollem Maße ausgenutzt wird.

Besonders günstige Voraussetzungen für eine Anlage von Bolzenkopf und Mutter näher zur Bolzenachse ergeben sich dann, wenn die Anlageflächen an den Schenkelaußenseiten des Kettenschlosses etwa kugelsegmentförmig gewölbt sind. Die Anlage kann aber auch noch dadurch verbessert werden, daß der Bolzenkopf des Schraubenbolzens und die Mutter an ihren gegen die beiden Schenkel des Kettenschlosses gerichteten Stirnseiten konkave Aussparungen aufweisen, deren Wölbung der Wölbung der konvexen Anlageflächen an den beiden Schenkelaußenseiten des Kettenschlosses angepaßt ist.

Weitere Einzelheiten und Vorteile der Erfindung ergeben sich aus der folgenden schematischen Gegenüberstellung eines Kettenschlosses nach dem Stand der Technik und zweier bevorzugter Ausführungsbeispiele von erfindungsgemäß ausgebildeten Kettenschlössern. Es zeigen

Fig. 1    ein bekanntes Kettenschloß mit über die parallele Stellung hinaus zusammengedrückten Schloßschenkeln und einem dadurch auf Biegung beanspruchten Schraubenbolzen,

Fig. 2     eine erste Ausführungsform eines erfindungsgemäßen Kettenschlosses mit parallel zueinander
           stehenden Schloßschenkeln,

Fig. 3     dieses erfindungsgemäße Kettenschloß mit über die
           parallele Stellung hinaus zusammengedrückten
           Schenkeln und einem auf Zug beanspruchten Schraubenbolzen,

Fig. 4     das erfindungsgemäße Kettenschloß mit über die
           parallele Stellung hinaus nach außen auseinandergespreizten Schenkeln und auf Zug beanspruchtem Schraubenbolzen,

Fig. 5     einen Schraubenbolzen mit Mutter in einer gegenüber Fig. 2 bis 4 abgewandelten Ausführungsform
           und

Fig. 6     eine weggebrochene Teildarstellung der beiden
           Schloßschenkel einer gegenüber Fig. 2 bis 4 ab-
           gewandelten zweiten Ausführungsform des erfin-
           dungsgemäßen Kettenschlosses.

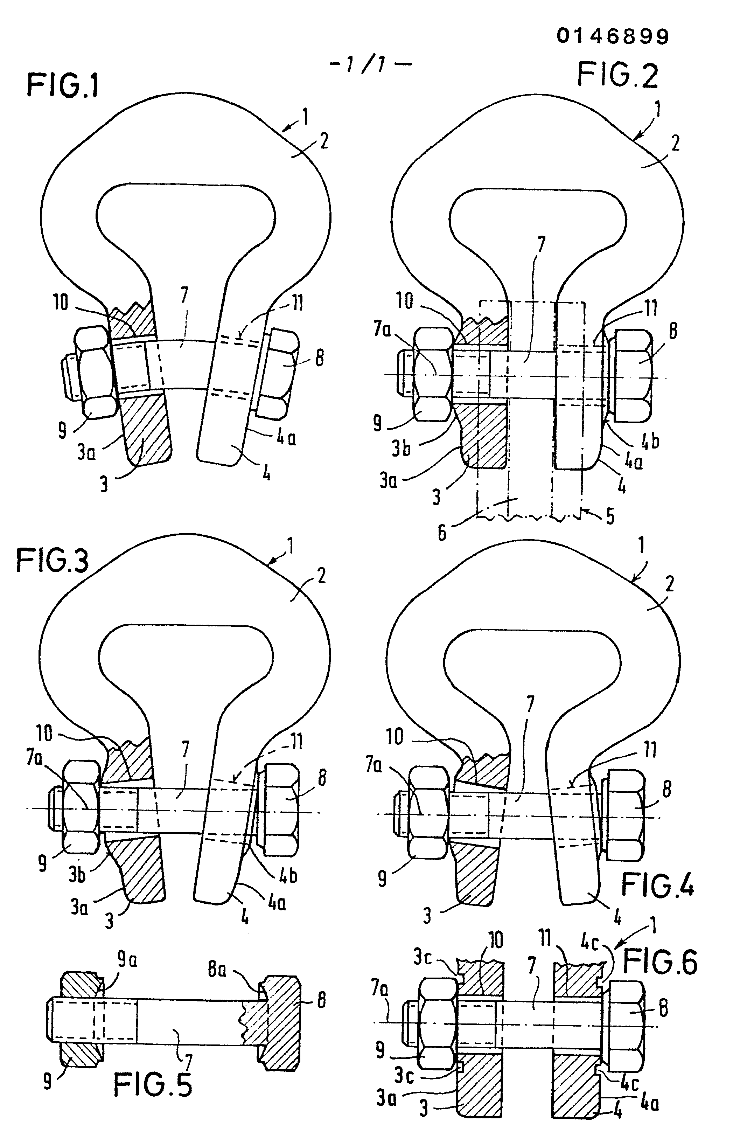

Die in der Zeichnung gezeigten Kettenschlösser für Kratzketten von Doppelketten-Kratzförderern haben in bekannter
Weise einen U-förmigen Schloßbügel 2 mit davon im wesentlichen parallel zueinander weggerichteten Schenkeln 3, 4,
zwischen denen ein Kratzeisen 5 (Fig. 2) an seinem Steg 6
mittels eines in Kettenlängsrichtung angeordneten Schraubenbolzens 7 mit Bolzenkopf 8 und Mutter 9 festgeklemmt
werden kann.

Bei dem in Fig. 1 gezeigten Kettenschloß handelt es sich
um eine bekannte Ausführungsform nach DIN 22 252, bei der

- 5 -                              0146899

die beiden Schloßschenkel 3, 4 an ihren Außenseiten 3a, 4a ringförmige ebene Anlageflächen für den Bolzenkopf 8 und die Mutter 9 rings um die im entspannten Zustand des Schlosses miteinander fluchtenden beiden Bohrungen 10, 11 für den Schraubenbolzen 7 aufweisen. Wird ein derartiges Kettenschloß, wie dies in Fig. 1 nur der Deutlichkeit halber stark überhöht gezeigt ist, beispielsweise an einem Kratzeisen 5 mit einem zu dünnen Stegteil 6 befestigt, oder sind das Stegteil 6 und die Schenkel 3, 4 des Kettenschlosses bereits so weit verschlissen, daß sie die zulässigen Toleranzen überschreiten, so wird der Schraubenbolzen 7 beim Festziehen der Mutter 9 so stark gespannt, daß er mit dem Bolzenkopf 8 und der Mutter 9 nicht mehr nur einseitig an den Außenseiten 3a, 4a der beiden Schloßschenkel 3, 4 anliegt, sondern an diesen Stellen zunehmend ringförmig zur Anlage kommt und dadurch unter Biegespannung gesetzt wird.

Wie Fig. 2, 3 und 4 zeigen, weisen die beiden Schenkel 3, 4 des Schloßbügels 2 bei der erfindungsgemäßen Ausführungsform des Kettenschlosses 1 an ihren Außenseiten 3a, 4a demgegenüber von den Schenkelaußenseiten nach außen hervorstehende, vorzugsweise konvexe Anlageflächen 3b, 4b für den Bolzenkopf 8 und die Mutter 9 des Schraubenbolzens 7 derart auf, daß der Bolzenkopf 8 und die Mutter 9 sowohl bei einem zu geringen Abstand der beiden Schenkel 3, 4 als auch bei einem zu großen Abstand zwischen den beiden Schenkelaußenseiten 3a, 4a nicht einseitig, sondern stets näher zur Bolzenachse 7a des Schraubenbolzens 7 beiderseits der Bohrungen 10, 11 an den beiden Schenkelaußenseiten 3a, 4a zur Anlage kommen. Dadurch wird der Schraubenbolzen 7 auch bei einer Veränderung des zulässigen Abstandes zwischen den Außenseiten 3a, 4a der beiden Schenkel 3, 4 des Kettenschlosses 1 nicht mehr vorwiegend auf Biegung, sondern auf Zug beansprucht, was einmal eine weitaus höhere Kraftaufnahme ermöglicht und zum anderen auch eine wesentlich längere Lebensdauer der Schraubenbolzen gewährleistet.

Die Anlage des Bolzenkopfes 8 und der Mutter 9 an konvexen Anlageflächen 3b, 4b der beiden Schenkel 3, 4 kann auch noch dadurch verbessert werden, daß der Bolzenkopf 8 des Schraubenbolzens 7 und die Mutter 9 an ihren gegen die beiden Schenkel 3, 4 des Kettenschlosses 1 gerichteten Stirnseiten konkave Aussparungen 8a, 9a aufweisen, deren Wölbung der Wölbung der konvexen Anlageflächen 3b, 4b an den beiden Schenkelaußenseiten 3, 4 so angepaßt ist, wie dies in Fig. 5 gezeigt ist.

In Fig. 2 bis 4 sind die konvexen Anlageflächen 3b, 4b ebenso wie die konkave Aussparungen 8a, 9a in Fig. 5 der Deutlichkeit halber stark überhöht gezeichnet. Sie können in der Praxis wesentlich flacher gehalten sein, ohne daß dadurch der Wölbungseffekt verlorengeht.

Bei dem Ausführungsbeispiel von Fig. 6 sind die ringförmigen Anlageflächen 3b, 4b für den Bolzenkopf 8 und die Mutter 9 gegenüber den Schenkelaußenseiten 3a, 4a nicht erhöht ausgebildet, sondern von in die Schenkelaußenseiten 3a, 4a versenkten Ringnuten 3c, 4c umgeben, so daß auch hier der Bolzen 7 beim Abweichen der beiden Schenkel 3, 4 aus der gezeigten Parallelstellung auf Zug und nicht auf Biegung beansprucht wird. Dies wird ebenso wie bei der Ausführungsform von Fig. 2 bis 4 zum Teil auch dadurch erreicht, daß sich die ringförmigen konzentrischen Stege an den beiden außenliegenden Enden der Bohrungen 10, 11 unter dem Druck von Bolzenkopf 8 und Mutter 9 einseitig verformen können und dadurch eine gleichmäßigere Beanspruchung des Bolzenschaftes durch Angriff der auftretenden Zugkräfte näher zur Bolzenachse 7a bewirken.

P a t e n t a n s p r ü c h e

1. Kettenschloß für die Kratzkette eines Doppelketten-Kratzförderers mit einem U-förmigen Schloßbügel, zwischen dessen annähernd parallelen Schenkeln ein Kratzeisen mittels eines in Kettenlängsrichtung angeordneten Schraubenbolzens festklemmbar ist, der zwei miteinander fluchtende Bohrungen in den beiden Schenkel durchsetzt und mit Bolzenkopf und Mutter an ringförmigen Anlageflächen an den Außenseiten der Schenkel anliegt, d a d u r c h g e k e n n z e i c h n e t, daß die ringförmigen Anlageflächen (3b, 4b) für den Bolzenkopf (8) und die Mutter (9) gegenüber den Schenkelaußenseiten (3a, 4a) nach außen hervorstehen oder von in die Schenkelaußenseiten (3a, 4a) versenkten Ringnuten (3c, 4c) umgeben sind.

2. Kettenschloß nach Anspruch 1, d a d u r c h g e - k e n n z e i c h n e t , daß die Schenkel (3, 4) an ihren Außenseiten (3a, 4a) konvexe Anlageflächen (3b, 4b) für den Bolzenkopf (8) und die Mutter (9) aufweisen.

3. Kettenschloß nach Anspruch 1 und 2, d a d u r c h g e k e n n z e i c h n e t , daß die Anlageflächen (3b, 4b) an den Schenkelaußenseiten (3a, 4a) etwa kugelsegmentförmig gewölbt sind.

4. Kettenschloß nach Anspruch 2 oder 3, **d a d u r c h g e k e n n z e i c h n e t ,** daß der Bolzenkopf (8) des Schraubenbolzens (7) und die Mutter (9) an ihren gegen die beiden Schenkel (3, 4) des Kettenschlosses (1) gerichteten Stirnseiten konkave Aussparungen (8a, 9a) aufweisen, deren Wölbung der Wölbung der konvexen Anlageflächen (3b, 4b) an den beiden Schenkelaußenseiten (3a, 4a) angepaßt ist.

FIG.1 FIG.2 FIG.3 FIG.4 FIG.5 FIG.6

0146899

-1/1-

71 595/84